# EUROPÄISCHE PATENTSCHRIFT

(11) **EP 2 125 922 B1**
(45) Veröffentlichungstag und Bekanntmachung des Hinweises auf die Patenterteilung: **31.10.2012**
(21) Anmeldenummer: 07848054.8
(22) Anmeldetag: 11.12.2007
(51) Int. Cl.: C08G 18/02, D21H 21/54

(54) **MIKROKAPSELN, ENTHALTEND VERBINDUNGEN MIT CARBODIIMIDGRUPPEN**
MICROCAPSULES COMPRISING COMPOUNDS WITH CARBODIIMIDE GROUPS
MICROCAPSULES CONTENANT DES COMPOSÉS COMPRENANT DES GROUPEMENTS CARBODIIMIDE

(30) Priorität: 22.12.2006 EP 06126994
(43) Veröffentlichungstag der Anmeldung: 02.12.2009
(73) Patentinhaber: BASF SE, 67056 Ludwigshafen (DE)
(72) Erfinder: BURGHARDT, Andre, PL-05-520 Konstancin Jeziorna (PL); HECHAVARRIA FONSECA, Maria Teresa, 68642 Bürstadt (DE); HÄBERLE, Karl, 67346 Speyer (DE); HARTZ, Oliver, 67117 Limburgerhof (DE); JUNG, Marc Rudolf, 67547 Worms (DE); SCHUMACHER, Karl-Heinz, 67433 Neustadt (DE); PREYSING, Denise von, 68199 Mannheim (DE); HENTZE, Hans-Peter, 68161 Mannheim (DE)
(86) Internationale Anmeldenummer: PCT/EP2007/063683
(87) Internationale Veröffentlichungsnummer: WO 2008/077766

(56) Entgegenhaltungen:
- WO-A-02/48278
- WO-A-03/068703
- WO-A-2006/053714
- WO-A-2007/104640
- DE-A1- 10 330 748
- DE-A1- 19 960 864

## Beschreibung

Die Erfindung betrifft Mikrokapseln mit einer Kapselwand aus einem organischen Polymer (kurz Kapselwand -Polymer genannt), wobei die Mikrokapseln im Kern Verbindungen mit Carbodiimidgruppen (kurz Carbodiimid-Verbindung) enthalten.

Als Klebstoff werden häufig wässrige Polymer-Dispersionen verwendet. Es ist auch allgemein gebräuchlich, der Dispersion einen Vernetzer zuzufügen, um eine ausreichende Wärmestandfestigkeit des Klebeverbunds zu gewährleisten. Als Vernetzer sind Carbodiimid-Verbindungen bekannt, z. B. aus WO 03/068703 und DE-A 10 2004 063 380. Die Carbodiimid-Verbindungen liegen selbst als wässrige Dispersionen vor und werden z. B. Klebstoffen oder sonstigen Beschichtungsmassen als Vernetzer zugesetzt. Die erhaltenen Mischungen sind begrenzt lagerstabil. Gewünscht ist, die Lagerstabilität zu verlängern, um beliebig lange Lagerzeiten zu ermöglichen.

Weiterhin sollen die anwendungstechnischen Eigenschaften der Mischungen möglichst gut sein. Von besonderer Bedeutung ist die Verwendung als Klebstoff, z. B. als Kaschierklebstoff, wie sie z. B. auch in DE-A 103 30 748 beschrieben ist. Die anwendungstechnischen Eigenschaften der bei der Kaschierung verwendeten Klebstoffe soll weiter verbessert werden. Neben einer guten Haftung auf den zu verklebenden Substraten ist eine hohe Festigkeit des erhaltenen Verbundes, insbesondere auch bei hohen Temperaturen (Wärmestandfestigkeit), erforderlich.

Aus DE-A 199 60 864 ist die Verwendung von Carbodiimid - Verbindungen als Vernetzer in Emulsionspolymerisaten bekannt, die Carbodiimid - Verbindungen werden bereits bei der Emulsionspolymersiation eingesetzt, so dass sich Emulsionspolymerisate bileden, welche die Carbodiimid-Verbindungen in gelöster Form enthalten.

Mikrokapseln sind als solche bekannt und werden für zur Verkapselung unterschiedlichster Stoffe verwendet, exemplarisch sei auf WO 2006/053714 verwiesen.

Aufgabe der Erfindung war die Verbesserung der Lagerstabilität von Mischungen, insbesondere Klebstoffen, die Carbodiimid - Verbindungen enthalten, Aufgabe war auch eine Verbesserung oder zumindest Erhaltung der anwendungstechnischen Eigenschaften dieser Klebstoffe.

Demgemäß wurden die eingangs definierten Mikrokapseln gefunden, gefunden wurden auch Klebstoffe, insbesondere Kaschierklebstoffe, welche diese Mikrokapseln enthalten.

### Zur Mikrokapsel

Die erfindungsgemäßen Mikrokapseln bestehen im wesentlichen aus der Kapselwand und dem im Kern der Mikrokapsel eingeschlossenen Wirkstoff, in diesem Fall mindestens eine Verbindung mit Carbodiimidgruppen (kurz Carbodiimid-Verbindung).

Mikrokapseln mit einem organischen Polymer als Kapselwand und einem eingeschlossenen Wirkstoff sind als solche bekannt, z. B. aus WO 2006/053714.

### Zur Kapselwand

Als Polymer für die Kapselwand können die hierfür üblichen Polymere verwendet werden.

Das Kapselwand -Polymer besteht vorzugsweise aus einem durch radikalische Polymerisation erhältlichen Polymer. Die Kapselwand, bzw. das Kapselwand-Polymer ist erntsprechend durch radikalische Polymerisation von ethylenisch ungesättigten Verbindungen (Monomere) erhältlich.

Besonders bevorzugt besteht das Kapselwand -Polymer zu mehr als 30 Gew.-%, insbesondere zu mehr als 50 Gew.-%, ganz besonders bevorzugt zu mehr als 80 Gew.-% aus Monomeren mit einer Acryl- oder Methacrylgruppe, insbesondere C₁ bis C₁₀ Alkyl(meth)acrylaten.

Das Kapselwand- Polymer kann auch Monomere mit zwei oder mehr ethylenisch ungesättigten, copolymersierbaren Gruppen enthalten (vernetzende Monomere). Diese Monomeren führen zu einer Vernetzung. Vernetzende Monomere bzw. eine Vernetzung ist im vorliegenden Fall nicht unbedingt notwendig, jedoch auch nicht hinderlich; der Anteil von vernetzenden Monomeren im Kapselwand-Polymer ist daher 0 bis 30 Gew.-%, insbesondere 0 bis 20 Gew.-% und besonders bevorzugt 0 bis 10 Gew.-%, bezogen auf das Kapselwand- Polymer.

Die Glasübergangstemperatur des Kapselwand-Polymeren kann -60 bis 150 °C, vorzugsweise -40 bis 100 °C, in einer besonderen Ausführungsform 0 bis 100 °C, insbesondere 0 bis 80 °C und ganz besonders bevorzugt 40 bis 80 °C betragen; bei der vorstehenden Glasübergangstemperatur handelt es sich um die nach Fox (siehe auch Handbook of Polymer Science and Technology, 1989 oder T.G. Fox, Bull. Am. Phys. Soc.(ser II) 1, 123, 1956) aus dem Gewichtsanteil der Monomeren und der Glasübergangstemperatur der Homopolymerisate berechnete Glasübergangstemperatur, bei der Berechnung werden Monomere mit zwei oder mehr als zwei copolymerisierbaren, ethylenisch ungesättigten Gruppen nicht berücksichtigt, d.h. die Summe aller anderen Monomeren entspricht 100 Gew.-%.

Vorzugsweise besteht die Kapselwand aus einem Polymeren aufgebaut aus
30 bis 100 Gew.-% wenigstens zwei voneinander verschiedener Monomere (Monomere I) aus der Gruppe umfassend C₁-C₂₄-Alkylester der Acryl- und/oder Methacrylsäure, 0 bis 30 Gew.-% eines oder mehrerer bi- oder polyfunktioneller Monomere (Monomere II), welches in Wasser nicht löslich oder schwer löslich ist und
0 bis 30 Gew.-% eines oder mehrerer sonstiger Monomere (Monomere III),
jeweils bezogen auf das Gesamtgewicht der Monomere, wobei die Monomere I 10 bis 90 Gew.-%, bezogen auf die Gesamtmenge der Monomere I, wenigstens ein Monomer la umfassen, dessen Homopolymerisat eine Glasübergangstemperatur ≤ 60°C aufweist.

Die Polymere der Kapselwand enthalten im Allgemeinen mindestens 30 Gew.-%, in bevorzugter Form mindestens 40 Gew.-%, in besonders bevorzugter Form mindestens 50 Gew.-%, insbesondere mindestens 60 Gew.-%, ganz besonders bevorzugt mindestens 70 Gew.-% sowie bis zu 100 Gew.-% wenigstens zwei voneinander verschiedener Monomere I aus der Gruppe umfassend C₁-C₂₄-Alkylester der Acryl- und/oder Methacrylsäure einpolymerisiert, bezogen auf das Gesamtgewicht der Monomere. Diese Monomere I umfassen 10 bis 90 Gew.-%, bevorzugt 10 bis 70 Gew.-%, insbesondere 15 bis 50 Gew.-%, bezogen auf die Gesamtmenge der Monomere I, wenigstens ein Monomer la, welches fähig ist, ein Homopolymerisats mit einer Glasübergangstemperatur (Tg) von ≤ 60 °C, bevorzugt ≤ 50°C, besonders bevorzugt ≤ 40 °C zu bilden.

Die Glasübergangstemperatur (Tg) eines Polmers ist definiert in der Encyclopedia of Chemical Technology, Volume 19, 4. Auflage, Seite 891, als die Temperatur unterhalb derer die Brownschen Molekularbewegungen längerer Kettensegmente (20-50 Kettenatome) der Polymere eingefroren sind. Ein Polymer zeigt unterhalb seiner Glasübergangstemperatur weder Fließverhalten noch Gummielastizität. Die Glasübergangstemperatur wird mittels DSC bestimmt gemäß DIN 53765: 1994-03.

Außerdem können die Polymere der Kapselwand im Allgemeinen bis zu 30 Gew.-%, vorzugsweise höchstens 25 Gew.-% und in besonders bevorzugter Form höchstens 20 Gew.-% eines bi- oder polyfunktionellen Monomers als Monomere II, welches in Wasser nicht löslich oder schwer löslich ist, einpolymerisiert enthalten.

Daneben können die Polymere bis zu 30 Gew.-%, vorzugsweise bis zu 20 Gew.-%, sonstige Monomere III einpolymerisiert enthalten.

Vorzugsweise ist die Kapselwand nur aus Monomeren der Gruppe I und III aufgebaut. Besonders bevorzugt sind die Kapselwände im wesentlichen, bevorzugt ausschließlich aus Monomeren der Gruppe I aufgebaut.

Als Monomere I eignen sich die C₁-C₂₄-Alkylester der Acryl- und/oder Methacrylsäure. Beispielhaft seien Methyl-, Ethyl-, n-Propyl-, iso-Propyl-, n-Butyl-, iso-Butyl-, sec.-Butyl- und tert.-Butylacrylat und 2-Ethyhexylacrylat sowie Methyl-, Ethyl-, n-Propyl-, iso-Propyl-, n-Butyl-, iso-Butyl-, sec.-Butyl- und tert.-Butylmethacrylat genannt.

Geeignete Monomere la, deren Homopolymerisats eine Glasübergangstemperatur (Tg) von ≤ 60°C aufweist, sind beispielsweise die C₁-C₂₄-Alkylester der Acrylsäure und Butylmethacrylat. Beispielhaft seien Methylacrylat, Ethylacrylat, Propylacrylat, n-Butylacrylat, t-Butylacrylat, n-Pentylacrylat, 2-Methylbutylacrylat, 3-Methylbutylacrylat, Hexylacrylat, Ethylhexylacrylat und Propylheptylacrylat genannt. Bevorzugt wird n-Butylacrylat.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20 °C zu verstehen. Unter bi- oder polyfunktionellen Monomeren versteht man Verbindungen, die wenigstens zwei nichtkonjugierte ethylenische Doppelbindungen haben. Vornehmlich kommen Divinyl- und Polyvinylmonomere in Betracht, die eine Vernetzung der Kapselwand während der Polymerisation bewirken.

Geignete Divinylmonomere sind Divinylbenzol, Trivinylbenzol und Divinylcyclohexan und Trivinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure, ferner die Polyallyl- und Polyvinylether dieser Polyole. Bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Als Monomere III kommen sonstige monoethylenisch ungesättigte, von Monomeren (I) verschiedene Monomere in Betracht, bevorzugt sind Monomere IIIa wie Vinylacetat, Vinylpropionat und Vinylpyridin.

Besonders bevorzugt sind die wasserlöslichen Monomere IIIb, z. B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Das Kapselwand-Polymer enthält funktionellen Gruppen, insbesondere Säuregruppen, z. B. Carbonsäuregruppen, die mit Carbodiimidgruppen vernetzen können, nur kleinen Mengen oder gar nicht; der Gehalt an Monomeren mit Säure- , insbesondere Carbonsäuregruppen ist der vorzugsweise kleiner 20 Gew.-%, besonders bevorzugt kleiner 10 Gew.-%, insbesondere kleiner 5 Gew.-% und ganz besonders bevorzugt kleiner 2 Gew.-% bzw. 0 %.

### Zum Kernmaterial

Die Mikrokapseln enthalten als Wirkstoff mindestens eine Verbindung mit Carbodiimidgruppen.

Geeignete Verbindungen mit Carbodiimidgruppen enthalten im Allgemeinen im Mittel 1 bis 20, vorzugsweise 1 bis 15, besonders bevorzugt 2 bis 10 Carbodiimidgruppen.

Das zahlenmittlere Molgewicht Mn der Carbodiimid-Verbindungen beträgt vorzugsweise 100 bis 10000 besonders bevorzugt 200 bis 5000 und ganz besonders 500 bis 2000 g/mol.

Das zahlenmittlere Molekulargewicht wird bestimmt durch Endgruppenanalyse der Diisocyanate (d.h. Verbrauch der Isocyanatgruppen durch Carbodiimidbildung, s. unten) oder falls die Endgruppenanalyse nicht möglich ist, durch Gelpermeationschromatographie (Polystyrolstandard, THF als Elutionsmittel).

Carbodiimidgruppen sind in einfacher Weise aus zwei Isocyanatgruppen unter Abspaltung von Kohlendioxid erhältlich:

-R-N=C=O + O=C=N-R

-R-N=C=N-R + CO₂

Ausgehend von Polyisocyanaten, bzw. Diisocyanaten sind so Carbodiimide mit mehreren Carbodiimidgruppen und gegebenenfalls Isocyanatgruppen, insbesondere endständigen Isocyanatgruppen, erhältlich.

Als Diisocyanate in Betracht kommen z. B. Diisocyanate X(NCO)2, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendüsocyanat, Tetramethylxylylendüsocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Besonders bevorzugt ist TMXDI.

Durch die endständige Isocyanatgruppe können die Carbodiimide leicht hydrophil, z. B. durch Umsetzung mit Amino- oder Hydroxysäuren, modifiziert werden. Hydrophil modifizierte Carbodiimide lassen sich naturgemäß leichter mit wässrigen Klebstoffen bzw. Klebstoffen auf Basis hydrophiler Polymere mischen.

Ebenso leicht können die Carbodiimide an Polymere angebunden werden, in dem die Isocyanatgruppe mit einer reaktiven Gruppe des Polymeren, z. B. eine Aminogruppe oder Hydroxylgruppe umgesetzt wird.

Für die Verwendung in Mikrokapseln ist kein hydrophile Modifizierung der Carbodiimid-Verbindungen notwendig. Gegebenenfalls ist es aber vorteilhaft, die endständigen Isocyanatgruppen zu blockieren, so dass die Carbodiimid-Verbindungen nicht reaktive Endgruppen haben. Besonders bevorzugt werden die endständigen Isocyanate dazu mit Verbindungen umgesetzt, welche nur eine mit Isocyanat reaktive Gruppe haben, z. B. mit einwertigen Alkoholen.

### Allgemeines

Die Mikrokapsel besteht vorzugsweise im wesentlichen aus der Kapselwand und der im Kern eingeschlossenen Carbodiimid- Verbindung. Die Kapselwand kann neben dem Kapselwand-Polymer weitere Bestandteile enthalten. Insbesondere können Schutzkolloide, welche bei der Herstellung der Mikrokapsel verwendet wurden, Bestandteil der Kapselwand sein und sich auf der äußeren Oberfläche befinden.

Das Gewichtsverhältnis von eingeschlossener Carbodiimid-verbindung zur Kapselwand (ggf. einschließlich Schutzkolloid und sonstiger Bestandteile) beträgt im allgemeinen von 50 : 50 bis 95 : 5. Bevorzugt wird ein Kern/Wand-Verhältnis von 70 : 30 bis 93:7.

Die gewichtsmittlere Teilchengröße der Kapseln (Z-Mittel mittels Lichtstreuung) beträgt vorzugsweise mindestens 0,5, insbesondere mindestens 1 µm; geeignete Teilchengrößen liegen z. B. im Bereich von 0,5 bis 50 µm, bevorzugt 1 bis 30 µm., besonders bevorzugt 5 bis 30 µm.

### Herstellung der Kapseln

Die Mikrokapseln lassen sich durch eine sogenannte in-situ-Polymerisation herstellen. Das Prinzip der Mikrokapselbildung basiert darauf, dass man aus den Monomeren, einem Radikalstarter, einem Schutzkolloid und der einzukapselnden lipophilen Substanz (hier die Carbodiimid-Verbindung) eine stabile Öl-in-Wasser-Emulsion herstellt. Anschließend löst man die Polymerisation der Monomeren durch Erwärmung aus und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A 101 39 171 beschrieben, auf deren Inhalt ausdrücklich Bezug genommen wird.

In der Regel werden die Mikrokapseln in Gegenwart wenigstens eines organischen oder anorganischen Schutzkolloids hergestellt. Sowohl organische wie auch anorganische Schutzkolloide können ionisch oder neutral sein. Schutzkolloide können dabei sowohl einzeln wie auch in Mischungen mehrerer gleich oder unterschiedlich geladener Schutzkolloide eingesetzt werden.

Organische Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen im Bereich von 0,5 bis 50 µm, vorzugsweise 0,5 bis 30 µm insbesondere 0,5 bis 10 µm, ausbilden.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxypropylcellulose.

Im allgemeinen werden Polyvinylalkohol oder teilhydrolysiertes Polyvinylacetat in einer Gesamtmenge von mindestens 3 Gew.-%, vorzugsweise von 6 bis 8 Gew.-% eingesetzt, bezogen auf die Mikrokapseln (ohne Schutzkolloid). Dabei ist es möglich, weitere oben genannte Schutzkolloide zusätzlich zu der bevorzugte Mengen Polyvinylalkohol oder teilhydrolysiertem Polyvinylacetat zuzusetzen. Bevorzugt werden die Mikrokapseln nur mit Polyvinylalkohol und/oder teilhydrolysiertem Polyvinylacetat und ohne Zusatz weiterer Schutzkolloide hergestellt.

Polyvinylalkohol ist erhältlich durch Polymerisieren von Vinylacetat, gegebenenfalls in Gegenwart von Comonomeren, und Hydrolyse des Polyvinylacetats unter Abspaltung der Acetylgruppen unter Bildung von Hydroxylgruppen. Der Hydrolysegrad der Polymeren kann beispielsweise 1 bis 100 % betragen und liegt bevorzugt in dem Bereich von 50 bis 100 % insbesondere von 65 bis 95 %. Unter teilhydrolysierten Polyvinylacetaten ist im Rahmen dieser Anmeldung ein Hydrolysegrad von < 50% und unter Polyvinylalkohol von ≥ 50 bis 100 % zu verstehen. Die Herstellung von Homo- und Copolymerisaten von Vinylacetat sowie die Hydrolyse dieser Polymerisate unter Bildung von Vinylalkoholeinheiten enthaltenden Polymeren ist allgemein bekannt. Vinylalkoholeinheiten enthaltende Polymere werden beispielsweise als Mowiol^{®} Marken von Kuraray Specialities Europe (KSE) vertrieben.

Bevorzugt werden Polyvinylalkohole oder teilhydrolysierte Polyvinylacetate, deren-Viskosität einer 4 gew.-%igen wässrigen Lösung bei 20 °C nach DIN 53015 einen Wert im Bereich von 3 bis 56 mPa*s aufweist, bevorzugt einem Wert von 14 bis 45 mPa*s, insbesondere von 22 bis 41 mPa*s. Bevorzugt werden Polyvinylalkohole mit einem Hydrolysegrad von ≥ 65%, bevorzugt ≥ 70% insbesondere ≥ 75%.

Organische anionische Schutzkolloide sind Natriumalginat, Polymethacrylsäure und ihre Copolymerisate, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Als anorganische Schutzkolloide, sind sogenannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind. Die Wirkweise und ihr Einsatz ist in der EP-A 1 029 018 sowie der EP-A 1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A 1 029 018, sowie der EP-A 1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Im allgemeinen werden die Schutzkolloide in Mengen von 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt. Organische Schutzkolloide werden bevorzugt in Mengen von 0,1 bis 10 Gew.-% eingesetzt, bezogen auf die Wasserphase der Emulsion.

Gemäß einer Ausführungsform werden anorganische Schutzkolloide sowie ihre Mischungen mit organischen Schutzkolloiden bevorzugt.

Gemäß einer weiteren Ausführungsform werden organisch neutrale Schutzkolloide bevorzugt.

Bevorzugt werden OH-Gruppen tragende Schutzkolloide wie Polyvinylalkohole und partiell hydrolysierte Polyvinylacetate.

Ferner ist es möglich zur Costabilisierung Tenside, bevorzugt nichtionische Tenside zuzusetzen. Geeignete Tenside sind dem "Handbook of Industrial Surfactants" zu entnehmen, auf dessen Inhalt ausdrücklich Bezug genommen wird. Die Tenside können in einer Menge von 0,01 bis 10 Gew.-% bezogen auf die Wasserphase der Emulsion eingesetzt werden.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden.

Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100 °C auf.

Weiterhin ist es möglich zur Polymerisation dem Fachmann bekannte Regler in üblichen Mengen zuzusetzen wie tert-Dodecylmercaptan oder Ethylhexylthioglycolat.

Vorzugsweise wählt man die Dispergierbedingungen zur Herstellung der stabilen Öl-in-Wasser Emulsion in an sich bekannter Weise so, dass die Öltröpfchen die Größe der gewünschten Mikrokapseln haben.

In der Regel führt man die Polymerisation bei 40 bis 150 °C, vorzugsweise bei 60 bis 120 °C durch. Natürlich sollte die Dispersions- und Polymerisationstemperatur oberhalb der Schmelztemperatur der lipophilen Substanzen liegen.

In der Regel führt man die Polymerisation bei 20 bis 100°C, vorzugsweise bei 40 bis 95 °C durch. Abhängig von der gewünschten lipophilen Substanz ist die Öl-in-Wasser-Emulsion bei einer Temperatur zu bilden, bei der das Kernmaterial flüssig/ölig ist. Entsprechend muss ein Radikalstarter gewählt werden, dessen Zerfallstemperatur oberhalb dieser Temperatur und die Polymerisation ebenfalls 2 bis 50 °C oberhalb dieser Temperatur durchgeführt werden, so dass man gegebenenfalls Radikalstarter wählt, deren Zerfallstemperatur oberhalb des Schmelzpunkts der lipophilen Substanz liegt.

Eine gängige Verfahrensvariante für lipophile Substanzen mit einem Schmelzpunkt bis etwa 60 °C ist eine Reaktionstemperatur beginnend bei 60 °C, die im Verlauf der Reaktion auf 85 °C erhöht wird. Vorteilhafte Radikalstarter haben eine 10-Stunden Halbwertszeit im Bereich von 45 bis 65 °C wie t-Butylperpivalat.

Nach einer weiteren Verfahrensvariante für lipophile Substanzen mit einem Schmelzpunkt oberhalb 60 °C wählt man wählt man ein Temperaturprogramm, welches bei entsprechend höheren Reaktionstemperaturen startet. Für Anfangstemperaturen um die 85 °C werden Radikalstarter mit einer stunden Halbwertszeit im Bereich von 70 bis 90 °C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z. B. bei einer Polymerisationstemperatur oberhalb 100 °C, arbeiten, also etwa im Bereich von 0,5 bis 5 bar.

Die Reaktionszeiten der Polymerisation betragen normalerweise 1 bis 10 Stunden, meistens 2 bis 5 Stunden.

Eine erfindungsgemäße Verfahrensvariante unter Einsatz von Polyvinylalkohol und/oder teilhydrolysiertem Polyvinylacetat ermöglicht eine vorteilhafte Verfahrensweise, gemäß der direkt bei erhöhter Temperatur dispergiert und polymerisiert wird.

Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 99/24525 beschrieben, vorteilhaft durch redoxinitiierte Polymerisation, wie in der DE-A 44 35 423, DE-A 44 19 518 und DE-A 44 35 422 beschrieben.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, das Schutzkolloid und seine Konzentration eingestellt werden kann. Bevorzugt werden Mikrokapseln mit einer mittleren Teilchengröße im Bereich von 0,5 bis 50 µm, bevorzugt 0,5 bis 30 µm (Z-Mittel mittels Lichtstreuung).

Die Mikrokapseln lassen vorzugsweise direkt als wässrige Dispersion verarbeiten. Eine Sprühtrocknung zu einem Mikrokapselnpulver ist generell möglich, hat jedoch schonend zu erfolgen.

### Verwendung als Vernetzer

Die Mikrokapseln eignen sich insbesondere als Vernetzer für Polymersysteme, insbesondere als Vernetzer für wässrige Polymere, vorzugsweise für Polymerdispersionen.

Die zu vernetzenden Polymere enthalten vorzugsweise Säure-gruppen, besonders bevorzugt Carbonsäuregruppen. Diese Säuregruppen vernetzen mit den Carbodiimidgruppen.

Die Mikrokapseln eignen sich z. B. als Vernetzer für wässrige Polyurethandispersionen oder wässrige Dispersionen von durch radikalische Polymerisation (vorzugsweise durch Emulsionspolymerisation) erhältlichen Polymeren, insbesondere auch deren Gemische.

Die Mikrokapseln eignen sich als Vernetzer in Klebstoffen, Anstrichen, Lacken, Papierstreichmassen oder sonstigen Beschichtungs- oder Imprägnierungsmitteln.

Besonders bevorzugt werden die Mikrokapseln als Vernetzer in Klebstoffen, besonders bevorzugt wässrigen Klebstoffen verwendet. Derartige Klebstoffe enthalten mindestens ein polymeres Bindemittel und gegebenenfalls Zusatzstoffe wie Füllstoffe, Verdicker, Entschäumer, Farbstoffe, Pigmente etc.

Bei dem polymeren Bindemittel handelt es sich vorzugsweise um ein Polyurethan, ein radikalisch polymerisiertes Polymer oder deren Gemische. Die polymeren Bindemittel liegen vorzugsweise in Form von wässrigen Dispersionen vor.

Als Polyurethan oder radikalisch polymerisiertes Polymer kommen insbesondere die in WO 03/068703 und DE 10 2004 063 380 beschriebenen Polyurethandispersionen oder Emulsionspolymerisate in Betracht.

Die Polyurethane bestehen vorzugsweise überwiegend aus Polyisocyanaten, insbesondere Diisocyanaten und Polyesterdiolen, Polyetherdiolen oder deren Gemische.

Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyetherdiolen und/oder Polyesterdiolen aufgebaut.

Vorzugsweise hat das Polyurethan einen Erweichungspunkt oder Schmelzpunkt im Bereich von -50 bis 150 °C, besonders bevorzugt von 0 bis 100, und ganz besonders bevorzugt von 10 bis 90 °C.

Besonders bevorzugt hat das Polyurethan einen Schmelzpunkt im vorstehenden Temperaturbereich.

Bevorzugt enthält das Polyurethan dazu Polyesterdiole in einer Menge von mehr als 10 Gew.-%, bezogen auf das Polyurethan.

Insgesamt ist das Polyurethan vorzugsweise aufgebaut aus:
a) Diisocyanaten,
b) Diolen, von denen
   b₁₎ 10 bis 100 mol-%, bezogen auf die Gesamtmenge der Diole (b), ein Molekulargewicht von 500 bis 5000 g/mol aufweisen,
   b₂₎ 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Insbesondere zu nennen sind als Monomere (a) Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendüsocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendüsocyanat, Tetramethylxylylendüsocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Bei den Diolen (b1) kann es sich um Polyesterpolyole handeln, die z. B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure.

Als mehrwertige Alkohole kommen z. B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Ferner kommen gegebenenfalls auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, in Betracht.

Gegebenenfalls können auch Polyesterdiole auf Lacton-Basis mitverwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-γ-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500.

Unter b₁) fallen nur Polyetherdiole, die zu weniger als 20 Gew.-% aus Ethylenoxid bestehen. Polyetherdiole mit mindestens 20 Gew.-% sind hydrophile Polyetherdiole, welche zu den Monomeren c) zählen.

Gegebenenfalls können auch Polyhydroxyolefine mitverwendet werden, bevorzugt solche mit 2 endständigen Hydroxylgruppen, z. B. α-ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 622 378 bekannt. Weitere geeignete Polyole sind Polyacetale, Polysiloxane und Alkydharze.

Bevorzugt handelt es sich bei mindestens 95 mol-% der Diole b₁₎ um Polyesterdiole. Besonders bevorzugt werden als Diole b₁₎ ausschließlich Polyesterdiole verwendet.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Als Diole b₂₎ kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Diole (b₁), bezogen auf die Gesamtmenge der Diole (b) 10 bis 100 mol-% und der Anteil der Monomere (b₂), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu erreichen, enthalten die Polyurethane von den Komponenten (a), (b) und (d) verschiedene Monomere (c), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, dass die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew. %, bezogen auf die Gewichtsmenge aller Monomere (a) bis (e).

Bevorzugte Monomere mit nichtionischen hydrophilen Gruppen sind Polyethylenoxiddiole mit mindestens 20 Gew. % Ethylenoxid, Polyethylenoxidmonoole sowie die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen.

(Potentiell) ionische Monomere (c) sind z. B. in Ullmanns Encyklopädie der technischen Chemie, 4. Auflage, Band 19, S. 311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁-bis C₆-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US 3,412,054 beschrieben sind. Insbesondere sind Verbindungen der allgemeinen Formel (c₁) 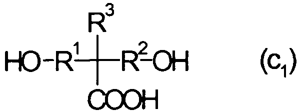 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, β-Alanin oder die in der DE-A 20 34 479 genannten Addukte von aliphatischen diprimären Diaminen an a,ß-ungesättigte Carbon- oder Sulfonsäuren in Betracht.

Solche Verbindungen gehorchen beispielsweise der Formel (c₂)

H₂N-R⁴-NH-R⁵-X (c₂)

in der
- R⁴ und R⁵ unabhängig voneinander für eine C₁- bis C₆-Alkandiyl-Einheit, bevorzugt Ethylen und
- X für COOH oder SO₃H
stehen.

Besonders bevorzugte Verbindungen der Formel (c₂) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche gegebenenfalls auch Bestandteile des Polyurethans sind, dienen im allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z. B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z. B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z. B. in Form der entsprechenden Ketimine (siehe z. B. CA-A 1 129 128), Ketazine (vgl. z. B. die US-A 4,269,748) oder Aminsalze (siehe US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl - oder Methacrylsäure wie Hydroxyethylacrylat oder Hydroxyethylmethacrylat.

Überzüge mit einem besonders guten Eigenschaftsprofil erhält man vor allem dann, wenn als Monomere (a) im wesentlichen nur aliphatische Diisocyanate, cycloaliphatische Diisocyanate oder-araliphatische Diisocyanate eingesetzt werden.

Diese Monomerkombination wird in hervorragender Weise ergänzt als Komponente (c) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA und IPDA als Komponente (d).

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann.

Normalerweise werden die Komponenten (a) bis (e) sowie ihre jeweiligen Molmengen so gewählt, dass das Verhältnis A : B mit
A der Molmenge an Isocyanatgruppen und
B der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des Polyurethans erfolgt vorzugsweise bei Reaktionstemperaturen von bis zu 180 °C, bevorzugt bis zu 150 °C unter Normaldruck oder unter autogenem Druck.

Die Herstellung von Polyurethanen, bzw. von wässrigen Polyurethandispersionen ist dem Fachmann bekannt.

Bei dem polymeren Bindemittel kann es sich auch um ein durch radikalische Polymerisation von ethylenisch ungesättigten Verbindungen (Monomere) erhältliches Polymer, vorzugsweise ein Emulsionspolymeriast handeln.

Das Polymer besteht vorzugsweise zu mindestens 40 Gew.-%, bevorzugt zu mindestens 60 Gew.-%, besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Ethylen, Propylen, Butadien, Isopren und Chloropren genannt.

Als Hauptmonomere bevorzugt sind die C1- bis C10-Alkylacrylate und -methacrylate, insbesondere C1- bis C8-Alkylacrylate und -methacrylate und Vinylaromaten, insbesondere Styrol und deren Mischungen.

Als Hauptmonomere ebenfalls bevorzugt sind Vinylester, aliphatische Kohlenwasserstoffe und deren Mischungen, z. B. Vinylacetat, Ethylen und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, z. B. Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z. B. auch Hydroxylgruppen enthaltende Monomere, insbesondere C₁-C₁₀-Hydroxyalkyl(meth)acrylate, (Meth)acrylamid.

Als weitere Monomere seien darüber hinaus Phenyloxyethylglykolmono-(meth-)acrylat, Glycidylacrylat, Glycidylmethacrylat, Amino- (meth)acrylate wie 2-Aminoethyl-(meth-) acrylat genannt.

Als weitere Monomere seien auch vernetzende Monomere genannt.

Besonders bevorzugt besteht das Polymer zu mindestens 40 Gew.-%, insbesondere mindestens 60 Gew.-% und ganz besonders bevorzugt zu mindestens 80 Gew.-% aus C₁-C₂₀-, insbesondere C₁-C₁₀Alkyl(meth)acrylaten.

Die Herstellung der Polymere erfolgt in einer bevorzugten Ausführungsform durch Emulsionspolymerisation, es handelt sich daher um ein Emulsionspolymerisat.

Die Herstellung kann jedoch z. B. auch durch Lösungspolymerisation und anschließende Dispergierung in Wasser erfolgen.

### Zum Klebstoff:

Der Klebstoff enthält das polymere Bindemittel und die Mikrokapseln. Das polymere Bindemittel liegt dazu vorzugsweise in Form einer wässrigen Dispersion vor. Weitere Zusatzstoffe, auch die Mikrokapseln können in einfacher Weise zur wässrigen Dispersion des polymeren Bindemittels gegeben werden.

Der Gehalt an Mikrokapseln beträgt vorzugsweise 0,1 bis 40 Gew.-Teile, besonders bevorzugt 0,2 bis 20 Gew.-Teile Mikrokapsel, ganz besonders bevorzugt 0,5 bis 10 Gew.-Teile auf 100 Gew.-% Klebstoff (fest, ohne Wasser oder sonstige bei 21 °C, 1 bar flüssige Bestandteile).

Die Menge der Mikrokapseln wird insbesondere so gewählt, dass der Klebstoff vorzugsweise 0,0001 bis 0,1 Mol, vorzugsweise 0,0005 bis 0,1 Mol, besonders bevorzugt 0,001 bis 0,1 Mol Carbodiimidgruppen auf 100 g Klebstoff (fest) enthält, Wasser oder sonstige organische Lösemittel mit einem Siedepunkt unter 150 °C bei 1 bar werden bei der Gewichtsmenge des Klebstoffs nicht berücksichtigt. Insbesondere ist der Gehalt an Carbodiimidgruppen nicht höher als 0,05 Mol/100 g Klebstoff (fest).

Weitere Zusatzstoffe sind z. B. Verdicker, Verlaufshilfsmittel, Entschäumer und Pigmente.

Bei dem Klebstoff handelt es sich vorzugsweise um einen Kaschierklebstoff.
Der Kaschierklebstoff kann zum Verkleben beliebiger Substrate verwendet werden.

Es können mehrere flexible Substrate, z. B. Polymerfolien, Papier, Metallfolien miteinander verklebt werden; insbesondere können derartige flexible Substrate mit nicht-flexible Substrate, z. B. Platten oder sonstige Formteile verklebt werden.

Besonders bevorzugt ist das erfindungsgemäße Verfahren ein Kaschierverfahren, bei dem nicht-flexible Substrate mit einem flexiblen, flächigen Substrat verklebt (kaschiert) werden.

Unter einem flexiblen Substrat wird dabei ein flächiges Substrat verstanden, welches sich bei einer Substratfläche von 50 x 50 cm, parallel zur Erdoberfläche an einer Seite festgehalten, durch das Eigengewicht durchbiegt.

Vorzugsweise handelt es sich um ein Substrat, welches auf Trommeln mit einem Außendurchmesser von 80 cm aufgewickelt werden kann.

Vorzugsweise handelt es sich bei dem flexiblen Substrat um flächige Substrate mit einer Dicke kleiner 10 mm, insbesondere kleiner 5 mm, besonders bevorzugt kleiner 0,5 mm, ganz besonders bevorzugt kleiner 0,3 mm.

Insbesondere kann es sich um Polymerfolien, Metallfolien, Vliese aus synthetischen oder natürlichen Fasern, beschichtetes oder unbeschichtetes Papier oder auch Furniere aus Holz oder Holzimitat handeln.

Besonders bevorzugt sind Polymerfolien, z. B. Folien aus Polyester, wie Polyethylenterephthalat, Polyolefinen wie Polyethylen, Polypropylen oder Polyvinylchlorid, aus Polyacetat, Polystyrol oder Copolymeren des Styrols.

Das flexible Substrat kann vorbehandelt sein, z. B. kann es mit Haftvermittlern beschichtet sein. Das flexible Substrat kann auch aus mehreren Schichten aufgebaut sein; in Betracht kommt z. B. eine Trägerschicht aus den vorstehenden Polymeren und auf diese Trägerschicht ein- oder beidseitig aufgebrachte Schutzbeschichtungen oder dekorative Beschichtungen, insbesondere kommt auch ein mehrschichtiges Substrat in Betracht, welches eine Schicht aus geschäumten Polymeren enthält.

Bei dem nicht-flexiblen Substrat kann es sich um einen Formkörper handeln, dessen äußere Form gleich bleibt, auch wenn dieser Formkörper mit seinem Eigengewicht belastet wird, z. B. indem der Formkörper freihängend nur an einer einzigen beliebigen Stelle gehalten wird.

Die vorstehenden Angaben beziehen sich auf Normalbedingungen (21 °C, 1 bar). Das nicht-flexible Substrat kann z. B. aus Holz oder Kunststoff, z. B. ABS (AcrylnitrilButadien-Styrol) sein. Es kann sich z. B. um Massivholz oder Sperrholz, Hartfaserplatten oder Mitteldichte Faserplatten (MDF Platten) handeln.

Insbesondere kann es sich Formteile handeln, welche aus synthetischen oder natürlichen Fasern oder Spänen aufgebaut sind. Die Formteile können eine beliebige Form haben.

Zur Verklebung kann zunächst das nicht-flexible Substrat mit dem Klebstoff beschichtet und gegebenenfalls nach Trocknung das flexible Substrat aufkaschiert werden.

Bei dem Verklebungs-Verfahren kann aber insbesondere auch das flexible Substrat mit Klebstoff beschichtet werden. Die Beschichtung kann nach üblichen Auftragsverfahren erfolgen. Nach der Beschichtung erfolgt eine Trocknung, vorzugsweise bei Raumtemperatur oder Temperaturen bis zu 80 °C, um Wasser oder sonstige Lösemittel zu entfernen, danach kann das beschichtete flexible Substrat aufkaschiert werden.

Die aufgebrachte Klebstoffmenge (auf dem flexiblen oder nicht-flexiblen Substrat) beträgt vorzugsweise 0,5 bis 100 g/m², besonders bevorzugt 2 bis 80 g/m², ganz besonders bevorzugt 10 bis 70 g/m².

Das mit Klebstoff beschichtete Substrat kann nahezu beliebig lange, z. B. über mehrere Wochen und Monate, gelagert werden.

Das beschichtete flexible Substrat kann nach gegebenenfalls erfolgter Trocknung aufgewickelt werden. Vor der Weiterverarbeitung erfolgt im Allgemeinen eine Lagerung oder auch ein Transport, so dass bis zur Weiterverarbeitung eine Zeit von mehr als einer Woche, bzw. mehr als 3 Wochen, insbesondere auch mehr als 6 Wochen, bzw. mehr als 10 Wochen vergeht.

Das beschichtete Substrat ist lagerstabil, d. h. auch nach mehreren Wochen Lagerzeit kann das beschichtete Substrat mit unverändert guten Ergebnissen verarbeitet werden.

Zur Verklebung werden die zu verklebenden Teile zusammengefügt. Die Temperatur in der Klebstoffschicht beträgt vorzugsweise 20 bis 200 °C, besonders bevorzugt 30 bis 180 °C. Geeigneterweise kann dazu das beschichtete flexible Substrat auf entsprechende Temperaturen erwärmt werden.

Die Verklebung erfolgt vorzugsweise unter Druck, dazu können z. B. die zu verklebenden Teile mit einem Druck von 0,05 bis 50 N/mm² zusammengepresst werden.

Die erhaltenen Verbunde zeichnen sich durch hohe mechanische Festigkeit auch bei erhöhten Temperaturen (Wärmestandfestigkeit) oder unter sich stark ändernden Klimabedingungen (Klimabeständigkeit) aus. Diese guten Ergebnisse werden auch erzielt, wenn das beschichtete flexible Substrat vor der Verklebung lange Zeit, z. B. mehr als 3 Monate gelagert wurde.

Auch die Weichmacherbeständigkeit, Kratzfestigkeit und Blockfestigkeit sind gut.

Die Mikrokapsel mit der Carbodiimid-Verbindung ist in reiner Form, in Wasser und in der wässrigen Dispersion lagerstabil und lässt sich leicht in Wasser emulgieren.

Aus den Klebstoffen, welche die Mikrokaspeln enthalten, lassen sich lagerstabile Filme herstellen. Auch diese Filme sind lagerstabil und können zu einem beliebigen späteren Zeitpunkt kaschiert werden (siehe oben).

Besondere Bedeutung ist die Verwendung als Kaschierklebstoff in der Auto- oder Möbelindustrie, z. B. bei der Verklebung von flexiblen Substraten auf Autoinnenteilen, wie Amaturenbretter, Fahrzeuginnenverkleidungen oder zur Herstellung von Schuhen.

### Beispiele

### 1. Herstellung verkapselter Carbodiimide

### 1.1. Herstellung eines Carbodiimid-Diisocyanats

500 Gew.-Teile 1,3-Bis-(1-methyl-1-isocyanato-ethyl)-benzol (TMXDI) mit einem NCO-Gehalt von 34,4 Gew.-% wurden in Gegenwart von 1,0 Gew.-Teilen , bezogen auf das Isocyanat, 1-Methyl-2-phospholen-1-oxid auf 180°C erhitzt und bei dieser Temperatur unter Kohlendioxid-Entwicklung kondensiert. Nachdem der NCO-Gehalt ca. 11 Gew.-% betrug, wurden Reste von nicht umgesetztem TMXDI bei einer Temperatur von 180°C unter vermindertem Druck abdestilliert.

Man erhielt ein Polycarbodiimid mit einem NCO-Gehalt von 8-7 Gew.-%, das einen Gehalt an -N=C=N- Gruppen von ca. 15 Gew.-% aufwies.

### 1.1.1. Herstellung eines Carbodiimid-Diurethans mit Ethanol

In einem Rührkolben wurden 800 g des Polycarbodiimids von Beispiel 1.1, 57 g Ethanol und 0,1 g Dibutylzinndilaurat (DBTL) bei 90°C 300 Minuten lang gerührt. Der NCO-Gehalt des erhaltenen viskosen Öls wurde titrimetrisch zu 0 Gew.-% bestimmt.

### 1.1.2. Herstellung eines Carbodiimid-Diurethans mit 2-Ethylhexanol

In einem Rührkolben wurden 800 g des Polycarbodiimids von Beispiel 1.1, 161 g 2-Ethylhexanol und 0,1 g Dibutylzinndilaurat (DBTL) bei 90°C 300 Minuten lang gerührt. Der NCO-Gehalt des erhaltenen viskosen Öls wurde titrimetrisch zu 0 Gew.-% bestimmt.

### 1.2. Verkapselung der Carbodiimide

### 1.2.1. Verkapselung des Carbodiimids aus Beispiel 1.1.1

**Wasserphase**

| | |
|---|---|
| 235 g | Wasser |
| 95 g | einer 5 gew.-%igen wässrigen Dispersion von Methylhydroxypropylcellulose (Culminal^{®} MHPC 100) |
| 23,8 g | einer 10 gew.-%igen wässrigen Polyvinylalkohollösung (Mowiol 15-79) |
| 1,1 g | einer 2,5 gew.-%igen wässrigen Natriumnitritlösung |

**Ölphase**

| | |
|---|---|
| 220 g | Carbodiimid aus Beispiel 1.1.1 |
| 12,6 g | Methylmethacrylat |
| 5,4 g | n-Butylacrylat |
| 0,38 g | Ethylhexylthioglycolat |
| 0,7 g | einer 75 gew.-%igen Lösung von tert-Butylperpivalat in aliphatischen Kohlenwasserstoffen |

**Zugabe 1**

| | |
|---|---|
| 2,69 g | einer 10 gew.-%igen wässrigen Lösung von tert-Butylhydroperoxid |

**Zulauf 1**

| | |
|---|---|
| 14,15 g | einer 1,1 gew.-%igen wässrigen Lösung von Ascorbinsäure |

**Zulauf 2**

| | |
|---|---|
| 0,73 g | einer 25 gew.-%igen Lösung von NaOH in Wasser |
| 0,72 g | Wasser |

**Zulauf 3**

| | |
|---|---|
| 3,35 g | einer 30 gew.-%igen Dispersion von Viscalex HV 30 in Wasser |

a) Bei 40 °C wurde die obige Wasserphase vorgelegt. Nach Zugabe der Ölphase wurde mit einem schnelllaufenden Dissolverrührer bei 3500 Upm dispergiert. Nach 40 Minuten Dispergierung wurde eine stabile Emulsion erhalten.
b) Die Emulsion wurde unter Rühren mit einem Ankerrührer über einen Zeitraum von 60 Minuten auf 70°C erwärmt, innerhalb von weiteren 60 Minuten auf eine Temperatur von 85 °C erwärmt und bei dieser Temperatur eine Stunde gehalten. Es wurde Zugabe 1 zugegeben und die entstandene Mikrokapseldispersion unter Rühren innerhalb von 30 Minuten auf 20°C gekühlt, während Zulauf 1 zudosiert wurde.
c) Bei Raumtemperatur wurden nacheinander Zulauf 2 und 3 unter Rühren zugegeben.

Man erhält eine Dispersion mit einem Festgehalt von 40,5 Gew.% mit einer mittleren Kapselgröße von 15 µm.

### 1.2.2. Verkapselung des Carbodiimids aus Beispiel 1.1.2

**Wasserphase**

| | |
|---|---|
| 235 g | Wasser |
| 95 g | einer 5 gew.-%igen wässrigen Dispersion von Methylhydroxypropylcellulose (Culminal^{®} MHPC 100) |
| 23,8 g | einer 10 gew.-%igen wässrigen Polyvinylalkohollösung (Mowiol 15-79) |
| 1,1 g | einer 2,5 gew.-%igen wässrigen Natriumnitritlösung |

**Ölphase**

| | |
|---|---|
| 220 g | Carbodiimid aus Beispiel 1.1.2 |
| 12,6 g | Methylmethacrylat |
| 5,4 g | n-Butylacrylat |
| 0,38 g | Ethylhexylthioglycolat |
| 0,7 g | einer 75 gew.-%igen Lösung von tert-Butylperpivalat in aliphatischen Kohlenwasserstoffen |

**Zugabe 1**

| | |
|---|---|
| 2,69 g | einer 10 gew.-%igen wässrigen Lösung von tert-Butylhydroperoxid |

**Zulauf 1**

| | |
|---|---|
| 14,15 g | einer 1,1 gew.-%igen wässrigen Lösung von Ascorbinsäure |

**Zulauf 2**

| | |
|---|---|
| 0,73 g | einer 25 gew.-%igen Lösung von NaOH in Wasser |
| 0,72 g | Wasser |

**Zulauf 3**

| | |
|---|---|
| 3,35 g | einer 30 gew.-%igen Dispersion von Viscalex HV 30 in Wasser |

a) Bei 40 °C wurde die obige Wasserphase vorgelegt. Nach Zugabe der Ölphase wurde mit einem schnelllaufenden Dissolverrührer bei 3500 Upm dispergiert. Nach 40 Minuten Dispergierung wurde eine stabile Emulsion erhalten.
b) Die Emulsion wurde unter Rühren mit einem Ankerrührer über einen Zeitraum von 60 Minuten auf 70 °C erwärmt, innerhalb von weiteren 60 Minuten auf eine Temperatur von 85 °C erwärmt und bei dieser Temperatur eine Stunde gehalten. Es wurde Zugabe 1 zugegeben und die entstandene Mikrokapseldispersion unter Rühren innerhalb von 30 Minuten auf 20°C gekühlt, während Zulauf 1 zudosiert wurde.
c) Bei Raumtemperatur wurden nacheinander Zulauf 2 und 3 unter Rühren zugegeben.

Man erhält eine Dispersion mit einem Festgehalt von 39,2 Gew.-% mit einer mittleren Kapselgröße von 20 µm.

### 2. Herstellung einer PUR-Dispersion

In einem Rührkolben mit Thermometer und Rückflusskühler werden 600 g (0,30 mol) Polytetrahydrofuran der OH-Zahl 56, 40,2 g (0,30 mol) Dimethylopropionsäure, 100 g Aceton und 0,1 g Dibutylzinndilaurat vorgelegt und auf 60°C erwärmt. Dazu werden 133,4 g (0,60 mol) Isophorondiisocyanat gegeben und drei Stunden bei 100 °C gerührt. Innerhalb von 20 Minuten wird mit 900 g Aceton verdünnt und auf 30 °C abgekühlt. Der NCO-Gehalt der Lösung wurde zu 0,1 Gew.-% bestimmt. Dann wurde mit 10,1 g (0,10 mol) Triethylamin versetzt; durch Zugabe von 790 g Wasser dispergiert und das Aceton unter vermindertem Druck abdestilliert. Es wurde eine feinteilige Dispersion mit einem Festgehalt von 50 Gew.-% erhalten.

### 3. Prüfung

### 3.1.

Zu 100 Gew.-Teilen der Dispersion aus Beispiel 2 wurden 12 Teile der Kapseldispersion aus Beispiel 1.2.1 gegeben und mit einem Propellerrührer eine Minute lang eingerührt.

### 3.2.

Zu 100 Gew. Teilen der Dispersion aus Beispiel 2 wurden 12 Teile der Kapseldispersion aus Beispiel 1.2.2 gegeben und mit einem Propellerrührer eine Minute lang eingerührt.

### 3.3. (zum Vergleich)

Zu 100 Gew. Teilen der Dispersion aus Beispiel 2 wurden 5 Teile eines Carbodiimids, das nach Beispiel 1 der DE 10 2004 063 380 hergestellt war (Carbodiimid auf Basis TMXDI), gegeben und mit einem Propellerrührer eine Minute lang eingerührt.

Die Mischungen wurden mittels einer Spritzpistole auf MDF-Platten der Abmessungen 290 x 280 mm mit einem Auftragsgewicht von 90 bis 100 g/m² (nass) aufgebracht und 60 Minuten bei Raumtemperatur abgelüftet. In einer Tiefziehpresse der Fa. Bürkle, Multipress Typ LAMP wurden auf die beschichteten MDF-Platten Möbel-PVC-Folien der Fa. Roxan Typ 531744 Buche Taunus 350 µm, aufkaschiert.

### Kaschierbedingungen:

Vorwärmzeit: 80 Sekunden
Vakuumzeit: sechs Sekunden
Presszeit: 45 Sekunden
Presstemperatur: 121 °C
Formdruck: 4,5 bar

### Wärmestandfestigkeit:

Die kaschierten MDF-Platten wurden in einen auf 60 °C vorgeheizten Umlufttrockenschrank gelegt und nach einer Stunde die Verklebung der Folie auf der MDF-Platte optisch auf Folienschrumpf an den Kannte bzw. Ablösung der Folie beurteilt. Zeigten sich noch kein signifikanter Schrumpf oder Ablösungen, so wurde die Temperatur um 5°C erhöht und nach einer weiteren Stunde erneut die Verklebung beurteilt. Angegeben wird die maximale Temperatur, bei der der Folienschrumpf noch <= 0,3 mm ist.

### Ergebnisse:

3.1: 75 °C
3.2: 70 °C
3.3: (Vergleich): 70°C

### Lagerstabilität der Mischungen

Die Mischungen aus den Beispielen 3.1., 3.2. und 3.3. wurden bei Raumtemperatur zwölf Wochen lang gelagert. Nach dieser Zeit konnten die Mischungen aus den Beispielen 3.1. und 3.2. noch problemlos verarbeitet werden und zeigten eine Wärmestandfestigkeit von jeweils 75 °C.

Die Mischung aus Beispiel 3.3. war bereits nach sechs Wochen koaguliert und konnte nicht mehr geprüft werden.

## Patentansprüche

1. Mikrokapseln, **dadurch gekennzeichnet**, das
- die Kapselwand aus einem organischen Polymer (kurz Kapselwand-Polymer) gebildet wird und
- die Mikrokapseln im Kern Verbindungen mit Carbodiimidgruppen (kurz Carbodiimid-Verbindung) enthalten.

2. Mikrokapseln gemäß Anspruch 1, **dadurch gekennzeichnet, dass** es sich bei dem Kapselwand-Polymer um ein durch radikalische Polymerisation erhältliches Polymer handelt.

3. Mikrokapseln gemäß einem der Ansprüche 1 oder 2, **dadurch gekennzeichnet, dass** das Kapselwand -Polymer zu mehr als 50 Gew. % aus Monomeren mit einer Acryl- oder Methacrylgruppe besteht.

4. Mikrokapseln gemäß einem der Ansprüche 1 bis 3, **dadurch gekennzeichnet, dass** die Mikrokapseln eine gewichtsmittlere Teilchengröße von mindestens 1 µm haben.

5. Mikrokapseln gemäß einem der Ansprüche 1 bis 4, **dadurch gekennzeichnet, dass** die Carbodiimid-Verbindung im Mittel 2 bis 30 Carboddimidgruppen pro Molekül enthält.

6. Verwendung der Mikrokapseln gemäß einem der Ansprüche 1 bis 5 als Vernetzer.

7. Verwendung der Mikrokapseln gemäß einem der Ansprüche 1 bis 5 als Vernetzer für wässrige Polymere, insbesondere für Polymerdispersionen.

8. Verwendung der Mikrokapseln gemäß einem der Ansprüche 1 bis 5 als Vernetzer für wässrige Polyurethandispersionen oder wässrige Dispersionen von durch radikalische Polymerisation erhältlichen Polymeren, vorzugsweise von Emulsionspolymerisaten.

9. Verwendung der Mikrokapseln gemäß einem der Ansprüche 1 bis 5 als Vernetzer in Klebstoffen, Anstrichen, Lacken, Papierstreichmassen oder sonstigen Beschichtungs- oder Imprägnierungsmitteln.

10. Klebstoffe, enthaltend Mikrokapseln gemäß einem der Ansprüche 1 bis 5.

11. Klebstoffe gemäß Anspruch 10, enthaltend ein Polyurethan als Bindemittel.

12. Klebstoffe gemäß Anspruch 10 oder 11, **dadurch gekennzeichnet, dass** sie 0,1 Gew. Teile bis 40 Gew. Teile Mikrokapseln auf 100 Gew. Teile Feststoff (alle bei 21 °C, 1 bar nicht flüssigen Bestandteile) enthalten.

13. Verwendung der Klebstoffe gemäß einem der Ansprüche 10 bis 12 als Kaschierklebstoffe.

14. Verwendung gemäß Anspruch 13, **dadurch gekennzeichnet, dass** flächige Substrate, z. B. Polymerfolien, Papier oder Holzfurnier mit nicht flexiblen Substraten verklebt werden.

## Claims

1. Microcapsules wherein
- the capsule wall is formed from an organic polymer (capsule wall polymer for short) and
- the core of the microcapsules comprises compounds containing carbodiimide groups (carbodiimide compound for short).

2. microcapsules according to claim 1, wherein the capsule wall polymer is a polymer obtainable by free-radical polymerization.

3. The microcapsules according to either of claims 1 and 2, wherein more than 50% by weight of the capsule wall polymer is composed of monomers containing an acrylic or methacrylic group.

4. The microcapsules according to any one of claims 1 to 3, wherein the microcapsules have a weight-average particle size of at least 1 µm.

5. The microcapsules according to any one of claims 1 to 4, wherein the carbodiimide compound comprises on average 2 to 30 carbodiimide groups per molecule.

6. The use of the microcapsules according to any one of claims 1 to 5 as crosslinkers.

7. The use of the microcapsules according to any one of claims 1 to 5 as crosslinkers for aqueous polymers, in particular for polymer dispersions.

8. The use of the microcapsules according to any one of claims 1 to 5 as crosslinkers for aqueous polyurethane dispersions or aqueous dispersions of polymers obtainable by free-radical polymerization, preferably of emulsion polymers.

9. The use of the microcapsules according to any one of claims 1 to 5 as crosslinkers in adhesives, paints, varnishes, paper-coating slips or other costing or impregnating compositions.

10. An adhesive comprising microcapsules according to any one of claims 1 to 5.

11. The adhesive according to claim 10, comprising a polyurethane as binder.

12. The adhesive according to claims 10 or 11, comprising 0.1 part to 40 parts by weight of microcapsules per 100 parts by weight of solids (all constituents not liquid at 21°C and 1 bar).

13. The use of the adhesives according to any once of claims 10 to 12 as a laminating adhesive.

14. The use according to claims 13, wherein flat substrates, such as polymer sheets, paper or wood veneer, are bonded to nonflexible substrates.

## Revendications

1. Microcapsules, **caractérisées en ce que**
- la paroi des capsules est formée par un polymère organique (en abrégé polymère de paroi de capsule) et
- les microcapsules contiennent dans le noyau des composés présentant des groupes carbodiimide (en abrégé composé carbodiimide).

2. Microcapsules selon la revendication 1, **caractérisées en ce qu'**il s'agit, pour le polymère de paroi de capsule, d'un polymère pouvant être obtenu par polymérisation radicalaire.

3. Microcapsules selon l'une quelconque des revendications 1 ou 2, **caractérisées en ce que** le polymère de paroi de capsule est constitué à raison de plus de 50% en poids de monomères comprenant un groupe acryle ou méthacryle.

4. Microcapsules selon l'une quelconque des revendications 1 à 3, **caractérisée en ce que** les microcapsules présentant une grosseur pondérale moyenne des particules d'au moins 1 µm.

5. Microcapsules selon l'une quelconque des revendications 1 à 4, **caractérisées en ce que** le composé carbodiimide confient en moyenne 2 à 30 groupes carbodiimide par molécule.

6. Utilisation des microcapsules selon l'une quelconque des revendications 1 à 5 comme réticulant.

7. Utilisation des microcapsules selon l'une quelconque des revendications 1 à 5 comme réticulant pour des polyméries aqueux, en particulier pour des dispersions polymères.

8. Utilisation des microcapsules selon l'une quelconque des revendications 1 à 5 comme réticulant pour des dispersions aqueuses de polyuréthanne ou des dispersions aqueuses de polymère prouvant être obtenus par polymérisation radicalaire, de préférence de polymère en émulsion.

9. Utilisation des microcapsules selon l'une quelconque des revendications 1 à 5 comme réticulant dans des adhésifs, des peintures, des laques, des masses de couchage pour papier ou d'autres adents de revêtement ou d'imprégnation.

10. Adhésifs, contenant des microcapsules selon l'une quelconque des revendications 1 à 5.

11. Adhésif selon la revendication 10, contenant un polyuréthanne comme liant.

12. Adhésifs selon la revendication 10 ou 11, **caractérisés en ce qu'**ils contiennent 0,1 partie en poids à 40 parties en ponds de microcapsules pour 100 parties en ponds de solide (tous les constituants gnon liquides à 21°C, 1 bar).

13. Utilisation des adhésifs selon l'une quelconque des revendications 10 à 12 comme adhésifs de contrecollage.

14. Utilisation selon la revendication 13, **caractérisée en ce qu'**on assemble par collage des substrats plats, par exemple des feuilles polymères, du papier ou du placage en bois avec des substrats non souples.
